# EUROPÄISCHE PATENTSCHRIFT

(11) **EP 2 123 440 B1**
(45) Veröffentlichungstag und Bekanntmachung des Hinweises auf die Patenterteilung: **29.08.2012**
(21) Anmeldenummer: 09160275.5
(22) Anmeldetag: 14.05.2009
(51) Int. Cl.: B32B 5/26, B32B 23/10, D21H 27/38, D21H 27/42, D04H 13/00, D04H 1/559, D04H 1/425

(54) **Saugfähige Faserstoffbahn**
Absorbent sheet of fibrous material
Bande de matière fibreuse absorbante

(30) Priorität: 23.05.2008 DE 202008007008 U
(43) Veröffentlichungstag der Anmeldung: 25.11.2009
(73) Patentinhaber: McAirlaid's Vliesstoffe GmbH & Co. KG, 37339 Berlingerode (DE)
(72) Erfinder: Söder, Jens, 37081 Göttingen (DE); Schmidt, Andreas, 37115 Duderstadt (DE)
(74) Vertreter: Christophersen & Partner

(56) Entgegenhaltungen:
- EP-A1- 0 432 763
- WO-A1-01/66345
- WO-A1-2006/127312
- WO-A2-03/000487
- WO-A2-2004/016852
- WO-A2-2005/041815
- DE-U1- 29 913 054
- US-A- 4 436 780
- US-A1- 2005 142 973

## Beschreibung

Die vorliegende Erfindung betrifft eine saugfähige Faserstoffbahn mit mindestens einer aus Zellstofffasem zusammengesetzten Grundschicht und mindestens einer Außenschicht, welche zumindest bereichsweise mit der Grundschicht verbunden ist.

Im Hygienebereich finden Faserstoffbahnen aus Zellstoff-Fasern eine breite Anwendung. Die Faserstoffbahnen dienen als Saugkerne zur Aufnahme von Körperflüssigkeiten. Sie haben die Aufgabe, die Körperflüssigkeiten schnell aufzunehmen und dauerhaft zu absorbieren. Eine weitere Eigenschaft einer Zellstoffbahn ist die Durchleitung von Flüssigkeit oder Gasen in darunter liegende Strukturen. Da die Faserstoffbahnen vielfach direkten Körperkontakt haben, sollten sie möglichst gut körperverträglich sein und die eintretende Flüssigkeit gut verteilt aufnehmen. Zellstoff hat weiterhin den Vorteil, dass er biologisch abbaubar ist, d.h. er kann auf entsprechenden Deponien entsorgt werden, wo er rückstandslos verrottet. Für ihren Einsatz in Hygieneartikeln sollen die Faserstoffbahnen hoch saugfähig oder gut durchleitend, weich und als Bahn verarbeitbar sein. Zur Erhöhung der Absorptionskapazität werden der Faserstoffmatrix häufig so genannte Superabsorber, d.h. Polymere, die unter Bildung von Hydrogelen Wasser aufnehmen können, zugesetzt. Der Einsatz der Faserstoffbahnen im Hygienebereich macht es erforderlich, dass die zur Herstellung der Hygieneartikel verwendeten Materialien Additive und sonstige Hilfsstoffe nur in sehr geringem Umfang enthalten. Für die Verarbeitung der Faserstoffbahnen zu Saugkernen werden diese üblicherweise in Form von Zellstoff-Vliesen und Airlaids eingesetzt. Der Verbund der einzelnen Zellstoff-Fasern wird über Bindemittel erreicht.

Neben der Anwendung im Hygienebereich können die Faserstoffbahnen auch in weiteren Bereichen, wie in der Kosmetik oder im Haushalt eingesetzt werden, beispielsweise zur Entfernung von Schmutz und anderen Substanzen von Oberflächen sowie zur Hautreinigung und Körperpflege. Bei der Entfernung von Substanzen von Oberflächen und auch bei der Reinigung zeigen die reinen Faserstoffbahnen den Nachteil, dass sie eine relativ geringe Festigkeit aufweisen. Darüber hinaus ist die Zellulose eine hydrophile Substanz, die in Kontakt mit Wasser andere hydrophile Substanzen aufnehmen, wohingegen die Aufnahme und die Entfernung von hydrophoben Substanzen nur Aufgrund mechanischer Reibung möglich sind.

In der US 2005/0142973 wird eine poröse Faserbahn aus Nanofasern, die einen Durchmesser von 10 bis 1000 mm aufweisen, offenbart. Die Faserbahn enthält zwischen etwa 1 bis 99 Gew.% Nanofasern und zwischen etwa 99 und 1 Gew.% Zellstoff und besteht aus zwei Schichten, die unterschiedliche Anteile an Nanofasern aufweisen. Eine Schicht weist eine höhere Konzentration an Nanofasern und die zweite Schicht eine höhere Konzentration an Zellstoff auf. Die Schichten werden mittels eines Nasslaminierverfahrens (wet-laid) aufgebracht, wodurch eine mehrschichtige Bahn erhalten wird. Eine zusätzliche Verdichtung der porösen Faserbahn kann durch einen Kalander erreicht werden. Dadurch werden die einzelnen Schichten vollflächig miteinander verbunden und verdichtet. Es wird über die gesamte Bahnfläche eine glatte Struktur erhalten.

Die WO 2006/127312 offenbart ein Verfahren zur Herstellung von Papier oder Karton, in welchem zunächst ein Gewebe aus Zellulosefasern und eine Vielzahl von Nanofasern gebildet wird, indem die Nanofasern auf das Gewebe aus Papierfasern in einer Menge von etwa 50 bis 100 Gew.% aufgebracht werden. Es wird ein Composit-Gewebe erhalten mit einer Nanogewebeschicht, die Nanofasern und ein Netz aus Zellstofffasern enthält. In dem in der WO 2006/127312 offenbarten Verfahren werden die Nanofasern unmittelbar nach deren Herstellung auf dem Gewebe aus Zellstofffasern angeordnet. Es folgt dadurch quasi ein insitu-Aufbringen der Nanofasern auf dem Gewebe aus Zellstoff und somit eine nahezu vollflächige Beschichtung der Zellstofffasern. Die Nanofasern und die Zellstofffasern werden unter Verwendung eines Bindemittels miteinander verbunden. Eine Verdichtung erfolgt mittels Kalanderwalzen.

Die WO 01/66345 offenbart ein mehrlagiges Nonwoven-Material, das als Airlaid vorliegt und als Feuchtetuch eingesetzt werden kann. Das Nonwoven-Material weist mindestens drei Schichten auf, wobei jede dieser Schichten eine ausreichende Menge an Konjugatfasem enthalten sollte, die eine entsprechende Faser-Faser-Bindung der einzelnen Fasern innerhalb der Schichten gewährleisten. Die Zellulosefasern dienen dazu, dem Produkt eine weiche, gewebeähnliche Struktur zu verleihen. Die einzelnen Schichten sind vollflächig miteinander verbunden.

Aus der US 4,436,780 ist ein Wischtuch bekannt, das aus einem Laminat hergestellt ist. Das Laminat besteht aus einem Gewebe mit einem relativ hohem Grundgewicht aus schmelzgeblasenen thermoplastischen Mikrofasern und einem Gewebe mit einem relativen geringen Grundgewicht aus kontinuierlichen thermoplastischen Filamenten, das auf beiden Seiten des Gewebes mit hohem Grundgewicht angeordnet ist.

Die aus dem Stand der Technik bekannten Faserstoffbahnen enthalten thermoplastische Polymere, die quasi angeschmolzen werden, und so einen Verbund liefern, die das Austreten von Zellulosefasern oder anderen Fasern aus diesem Faserverbund verhindern.

Die Herstellung von bindemittelfreien Faserstoffbahnen ist ebenfalls bekannt. So wird im europäischen Patent 1 032 342 B1 ein Verfahren zur Herstellung einer aus Zellstoff-Fasern oder Zellstoff-Pulpe oder Zellstoff-Karton bestehenden, ohne Verwendung von zusätzlichen Bindemitteln hergestellten, saugfähigen und rollbaren Faserstoffbahnen mit einer Reißfestigkeit von wenigstens 0,12 kN/m offenbart. In dem beschriebenen Verfahren wird eine regellose Zellstoff-Faserlage vorgelegt und unter einem relativ niedrigen Druck vorverdichtet, wobei ein lockeres Vlies mit geringer Dichte und Reißfestigkeit erzeugt wird. Dieses Vlies wird in den Spalt eines Kalanderrollen-Paares eingeführt, wobei ein Muster von punkt- oder linienförmigen Druckbereichen unter einem relativ höheren Druck erzeugt wird, so dass die regellos liegenden Fasern aufeinander gedrückt werden. Die Fasern werden in dem Kalanderrollen-Paar unter einem Druck von 250 - 600 MPa aufeinander gedrückt, so dass eine nicht-lösende Fusion der Fasern erfolgt und auf der Faserstoffbahn ein Prägemuster erzeugt wird. Zur Herstellung der aus dem Stand der Technik bekannten Faserstoffbahnen werden handelsübliche Zellulosefasern eingesetzt, die beispielsweise unter der Fachbezeichnung "Fluff Pulp" bekannt sind. In dieser Einsatzform liegen die Zellulosefasern in gestreckter Form vor.

Angestrebt wird daher eine wegen ihrer spezifischen Saugfähigkeit für Wasser eine für neuartige Anwendungen geeignete Faserstoffbahn auf Basis von Cellulosefasern.

Gegenstand der vorliegenden Erfindung ist demgemäß eine saugfähige Faserstoffbahn der eingangs genannten Art, die dadurch gekennzeichnet ist, dass mindestens eine Außenschicht ein aus Fasern zusammengesetztes Vlies ist, wobei die Fasern einen Durchmesser von 50 nm bis 25 µm aufweisen, dass die Grundschicht aus einer Faserstoffbahn aus einer im Luftstrom aufgeschichteten Schüttung von Zellstofffasern aus defiberisiertem Zellstoff besteht und dass die Grundschicht und das Vlies bereichsweise infolge örtlich auf diese Bereiche begrenzte Druckbeaufschlagung bindemittelfrei miteinander verbunden sind.

Überraschenderweise wurde festgestellt, dass sich durch die Kombination aus einer Grundschicht aus Zellstofffasern und einer Außenschicht, die ein aus Nanofasern zusammengesetztes Vlies ist, die Eigenschaften einer Faserstoffbahn ändern und diese somit für vielfältigere Anwendungen einsetzbar sind als Faserstoffbahnen mit Cellulose an der Oberseite. Während mit Zellstofffasern im Wesentlichen hydrophile Substanzen aufgenommen werden, wurde festgestellt, dass mit der Kombination aus Zellstofffaser und Nanovlies auch hydrophobe Substanzen aufgenommen werden. Diese Eigenschaft zeigt insbesondere in der Kosmetik und Hautpflege große Vorteile, so können fetthaltige Verschmutzungen oder auch Hautpflegeprodukte wie Make-up ohne weitere Zusatzstoffe oder Hilfsmittel, wie Tenside oder andere Reinigungsmittel, problemlos von der Haut entfernt werden, und zwar insbesondere dann, wenn die erfindungsgemäße Faserstoffbahn mit Wasser beaufschlagt ist.

Darüber hinaus wurde festgestellt, dass das Nanovlies bei der Anwendung im Kosmetikbereich eine leicht abrasive Wirkung zeigt und z. B. beim Entfernung von dekorativer Kosmetik, die erfindungsgemäße Faserstoff einen peelende Effekt auf die Haut hat.

Unter Nanovliesen im Sinne der vorliegenden Erfindung werden Vliese aus Textilfasern mit einem Durchmesser von üblicherweise weniger als 30 µm verstanden. Erfindungsgemäß eingesetzte Fasern haben einen Durchmesser zwischen 50 nm und 25 µm, bevorzugt zwischen 50 nm und 5 µm. Nanovliese und Verfahren zu ihrer Herstellung sind beispielsweise bekannt aus dem US-Patent 4,043,331 und der internationalen Patentanmeldung WO01/27365. Sie sind im Handel erhältlich und können neben den genannten Polymeren ggf. noch Zuschlagstoffe, dünne Beschichtungen etc. aufweisen. Die Fasern können in den Vlies definiert in einer oder mehrerer Vorzugsrichtungen abgelegt sein oder stochastisch orientiert sein. Sie können lose zusammenliegen oder aber verfestigt sein. Vorzugsweise sind sie aus einem schmelzspinnfähigen Polymerisat hergestellt, insbesondere aus Polyurethan, Polypropylen, Polyethylen, Polytetraflorethylen, Siliconpolymere oder biologisch abbaubare Polymere wie PLA oder auf Stärke basierende Produkte.

Das Nanovlies weist in der erfindungsgemäßen Faserstoffbahn üblicherweise eine Dicke zwischen 5 und 1.000 µm, insbesondere zwischen 10 und 500 µm, und eine mittlere Porengröße von 1 bis 100 µm auf.

In einer möglichen Ausführungsform sind in der erfindungsgemäßen Faserstoffbahn die Außenschicht aus Nanofasern und die Grundschicht bereichsweise in diskreten Bereichen infolge örtlich auf diese Bereiche begrenzte Druck- und ggf. Temperaturbeaufschlagung bindemittelfrei miteinander verbunden. Die Temperaturbeaufschlagung ist insbesondere bei Nanovliesen vorteilhaft, die zusätzlich niedrig schmelzende Polymere enthalten. Diese niedrigschmelzenden Polymere können bei der Herstellung der erfindungsgemäßen Faserstoffbahn durch die Druck- und ggf. Temperaturbeaufschlagung anschmelzen und somit eine Verbindung zwischen Nanovlies und Grundschicht herstellen. Die Temperaturbeaufschlagung beträgt vorzugsweise von 60 bis 130°C, vorzugsweise liegt die Temperatur über 80°C.

In einer weiteren Ausführungsform weist die erfindungsgemäße Faserstoffbahn dort, wo die Grundschicht und die Außenschicht(en) bereichsweise miteinander verbunden ist (sind), diskrete Prägebereiche mit beidseitigen Einsenkungen auf, wobei in diesen Prägebereichen sowohl die Zellstofffasern der Grundschicht als auch die Nanofasern des Vlieses jeweils miteinander verbunden sind.

Die in der Faserstoffbahn verwendete Grundschicht weist einen hohen Anteil an miteinander verbundenen Zellstofffasern auf, die in einem Prägemuster aus punkt- oder linienförmigen Prägebereichen miteinander verpresst und in den Prägebereichen infolge hoher Druckbeaufschlagung klebstoff- und/oder bindemittelfrei verbunden sind.

Die Grundschicht besteht aus einer im Luftstrom aufgeschichteten Schüttung (Airlaid) von Zellstofffasern aus defiberisiertem Zellstoff (Wood Pulp), die als "Fluff Pulp" bezeichnet wird. Ferner können auch sulfid- oder sulfatgebleichte Langfaser-Zellstoffe eingesetzt werden.

Zur Verbesserung der Absorptionsfähigkeit und/oder des Reinigungsverhaltens in Bezug auf die aufzunehmenden oder zu entfernenden Substanzen können sowohl die Grundschicht als auch die Außenschicht Zusätze an Hilfs- und Füllstoffen aufweisen, wie Titandioxid, Kreide, Kaolin, superabsorbierende Polymere, geruchshemmende Wirkstoffe, wie solche auf Basis von Cyclodextrin aufweisen.

In einer weiteren Ausführungsform kann die erfindungsgemäße saugfähige Faserstoffbahn auf beiden Seiten der Grundschicht jeweils eine Vliesschicht aus Nanofasern aufweisen, die bereichsweise mit der Grundschicht verbunden sind. In einer alternativen Ausgestaltung weist die Grundschicht auf der einen Seite eine Vliesschicht aus Nanofasern auf und auf der anderen Seite eine Schicht aus beliebigen, flächenartigen Materialien, wie Textilien (sowohl Webtextilien als auch Non-Woven), wasserundurchlässige und wasserdurchlässige Kunststofffolie oder atmungsaktive Kunststofffolien eingesetzt werden.

In einer möglichen Ausführungsform ist auf der oberen Seite der Grundschicht jeweils eine Schicht aus einer wasserundurchlässigen oder wasserdurchlässigen Kunststofffolie angeordnet und bereichsweise mit der Grundschicht verbunden. In einer alternativen Ausführungsform ist die weitere Schicht eine Kunststofffolie, die vollständig mit der Grundschicht verbunden ist, z. B. durch Verkleben, ohne beispielsweise Prägebereiche auszubilden.

Ausführungsbeispiele der vorliegenden Erfindung werden nachfolgend anhand der Zeichnungen beschrieben. Es zeigen:
- Figur 1: in schematischer Darstellung eine Vorrichtung zur Herstellung der erfindungsgemäßen Faserstoffbahn;
- Figur 2: in vergrößerter Darstellung gemäß Figur 1 im Querschnitt den Druckbereich zweier Walzen mit pyramidenförmigen Noppen.

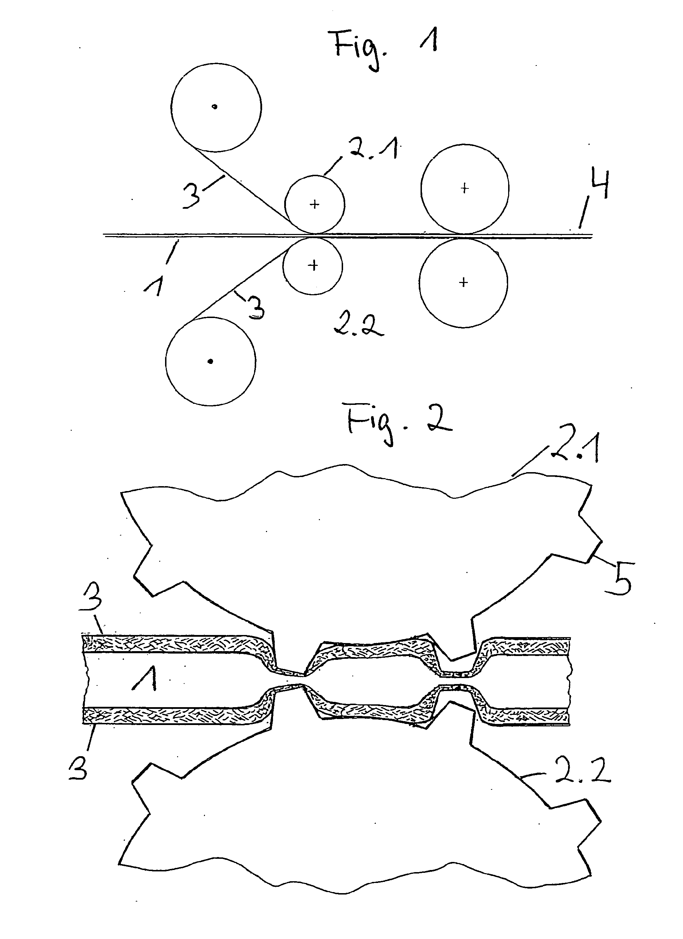

In Figur 1 ist in schematischer Reihenfolge eine Anordnung von Walzen und Rollen dargestellt, mit denen die erfindungsgemäße saugfähige Faserstoffbahn hergestellt werden kann. Der Herstellungsprozess geht aus von Zellulosefasern, die als Fluff Pulp vorzugsweise aus trockenem Wood Pulp mit Hilfe von Hammermühlen vereinzelt werden. Eine Schicht aus regellosen Fasern 1 wird auf einem hier nicht dargestellten Siebförderband 8 auf das Nanovlies abgelegt und zu einem ersten Kalanderwalzenpaar 2.1 und 2.2 gefördert. Zwischen den Kalanderwalzen 2.1 und 2.2 wird die regellose Zellulose-Faserlage zu einem lockeren Vlies mit geringer Dichte und Reißfestigkeit zusammengepresst. Das verdichtete und kompaktierte Vlies aus regellosen Fasern stellt die Grundschicht der erfindungsgemäßen Faserstoffbahn dar. Diese verdichtete Faserstoffbahn 1 wird zu einem Kalanderwalzenpaar 2.1, 2.2 gefördert. Vor Eintritt in die Kalanderrollen 2.1 und 2.2 wird von oben mit Nanovlies oder Folie belegt. In einer anderen Ausführung wird auch erst hier das untere Nanovlies zugeführt. Zwischen den Kalanderrollen 2.1 und 2.2 wird die Zellulosefaserlage (Grundschicht) dem aufgelegten Nanovlies einem Raster von punktförmigen Druckbereichen ausgesetzt, in denen die regellos liegenden Fasern unter hohem Druck aufeinander gedrückt werden, so dass eine innige, sich nach Aufhebung des Druckes nicht-lösende Fusion der Faserkörper erfolgt und eine Faserstoffbahn 4 mit einem Prägemuster erzeugt wird, dabei wird auch die Folie in den Verbund miteinbezogen. Durch die Druckbeaufschlagung wird vermieden, dass das Faser- oder Folienmaterial verkohlt oder karbonisiert. Eine zusätzliche Bindung wird durch das sinternde oder anschmelzende Folienmaterial erreicht. Die Rollen 2.1 und 2.2 werden bei normaler Zimmertemperatur, d. h. zwischen 18 und 26°C betrieben, wobei allerdings nicht ausgeschlossen wird, dass die Rollen auch beheizt werden können oder aber in den punktförmigen Druckbereichen auch punktuell eine höhere Temperatur aufgrund der hohen mechanischen Arbeit erreichen können.

In Figur 2 ist ein Ausführungsbeispiel eines Hochdruck-Bereiches zwischen den Kalanderwalzen 2.1 und 2.2. dargestellt. Die Walzen sind auf ihrem Walzenmantel mit Noppen 5 versehen, die bei der fertigen Faserstoffbahn Prägemuster ergeben. Auch andere Formen der Druckbereiche, wie Kegelstümpfe, Zylinder oder Quader, sind möglich und werden nach fachmännischem Ermessen entsprechend dem erforderlichen Druck, dem vorliegenden Ausgangsstoff und dem Material der Walzen, den auftretenden Temperaturen und dergleichen gewählt.

### Bezugszeichenliste

- 1: verdichtetes Zellulosevlies
- 2.1, 2.2: Kalanderwalzen
- 3: Nanovlies
- 4: Faserstoffbahn
- 5: Noppen auf dem Walzenmantel

## Patentansprüche

1. Saugfähige Faserstoffbahn mit einer aus Zellstofffasern zusammengesetzten Grundschicht und mindestens einer Außenschicht, welche zumindest bereichsweise mit der Grundschicht verbunden ist,
**dadurch gekennzeichnet,**
**dass** mindestens eine Außenschicht ein aus Fasern zusammengesetztes Vlies ist, wobei die Fasern einen Durchmesser von 50 nm bis 25 µm aufweisen,
**dass** die Grundschicht aus einer Faserstoffbahn aus einer im Luftstrom aufgeschichteten Schüttung von Zellstofffasern aus defiberisiertem Zellstoff besteht und
**dass** die Grundschicht und das Vlies bereichsweise infolge örtlich auf diese Bereiche begrenzte Druckbeaufschlagung bindemittelfrei miteinander verbunden sind.

2. Faserstoffbahn nach Anspruch 1, **dadurch gekennzeichnet, dass** die Grundschicht und das Vlies auch infolge Temperaturbeaufschlagung miteinander verbunden sind.

3. Faserstoffbahn nach Anspruch 1 oder 2, **dadurch gekennzeichnet, dass** die diskreten Bereiche Prägebereiche mit beidseitigen Einsenkungen sind, und dass In den Prägebereichen sowohl die Zellstofffasern der Grundschicht als auch die Fasern des Vlieses jeweils miteinander verpresst sind.

4. Faserstoffbahn nach einem der Ansprüche 1 bis 3, **dadurch gekennzeichnet, dass** das Vlies Fasern aus schmelzspinnfähigem Polymerisat enthält.

5. Faserstoffbahn nach Anspruch 4, **dadurch gekennzeichnet, dass** das schmelzspinnfähige Polymerisat aus Polyurethan, Polypropylen, Polyethylen, Polytetraflorethylen oder Siliconpolymeren ist.

6. Faserstoffbahn nach einem der Ansprüche 1 bis 8, **dadurch gekennzeichnet, dass** die Außenschicht einen Zusatz an Hilfs- und Füllstoffen wie Titandioxid, Kreide, Kaolin, superabsorbierende Polymere, geruchshemmende Wirkstoffe, vorzugsweise auf Basis von Cyclodextrin, aufweist.

7. Faserstoffbahn nach einem der Ansprüche 1 bis 9, **dadurch gekennzeichnet, dass** auf beiden Seiten der Grundschicht jeweils eine Vliesschicht aus Fasern angeordnet und bereichsweise mit der Grundschicht verbunden ist.

8. Faserstoffbahn nach einem der vorangegangenen Ansprüche, **dadurch gekennzeichnet, dass** auf der oberen Seite der Grundschicht jeweils eine Schicht aus einer wasserundurchlässigen oder einer wasserdurchlässigen Kunststofffolie angeordnet und in den diskreten Bereichen mit der Grundschicht verbunden ist.

## Claims

1. An absorbent sheet of fibrous material with a base layer formed from cellulose fibres and at least one outer layer which is joined at least area by area to the base layer,
**characterized in that**
at least one outer layer is a fleece formed from fibres, wherein the fibres have a diameter of from 50 nm to 25 µm,
the base layer comprises a sheet of fibrous material of a fill of cellulose fibres of defibrated cellulose stratified in an air flow, and
the base layer and the fleece are joined to each other area by area without binder as a result of pressure stressing limited locally to these areas.

2. A sheet of fibrous material according to Claim 1, **characterized in that** the base layer and the fleece also are joined to each other as a result of temperature stressing.

3. A sheet of fibrous material according to Claim 1 or 2, **characterized in that** the discrete areas are stamped areas with depressions on both sides, and both the cellulose fibres of the base layer and the fibres of the fleece are pressed against one another in each case in the stamped areas.

4. A sheet of fibrous material according to any one of Claims 1 to 3, **characterized in that** the fleece contains fibres of polymerizate capable of being melt-spun.

5. A sheet of fibrous material according to Claim 4, **characterized in that** the polymerizate capable of being melt-spun is of polyurethane, polypropylene, polyethylene, polytetrafluoroethylene or silicone polymers.

6. A sheet of fibrous material according to any one of Claims 1 to 8 [*sic*], **characterized in that** the outer layer contains an addition of auxiliary materials and fillers such as titanium dioxide, chalk, kaolin, superabsorbent polymers, odour-blocking active substances, preferably based on cyclodextrin.

7. A sheet of fibrous material according to any one of Claims 1 to 9 [*sic*], **characterized in that** a fleece layer of fibres is arranged on both sides of the base layer in each case and is joined area by area to the base layer.

8. A sheet of fibrous material according to any one of the preceding Claims, **characterized in that** a layer of a water-impermeable or a water-permeable plastics material sheet is arranged on the upper side of the base layer in each case and is joined to the base layer in the discrete areas.

## Revendications

1. Bande de matière fibreuse absorbante comprenant une couche de base constituée de fibres de cellulose et au moins une couche extérieure, laquelle est reliée au moins par endroits à la couche de base,
**caractérisée**
**en ce qu'**au moins une couche extérieure est un non-tissé assemblé à partir de fibres, les fibres présentant un diamètre de 50 nm jusqu'à 25 µm,
**en ce que** la couche de base est constituée d'une bande de matière fibreuse à base d'un entassement empilé dans le flux d'air de fibres de cellulose à base de cellulose de fibres et
**en ce que** la couche de base et le non-tissé sont reliés l'un à l'autre par endroits sans liant en raison d'une sollicitation de pression limitée localement à ces zones.

2. Bande de matière fibreuse selon la revendication 1, **caractérisée en ce que** la couche de base et le non-tissé sont reliés l'un à l'autre également en raison de la sollicitation en température.

3. Bande de matière fibreuse selon la revendication 1 ou 2, **caractérisée en ce que** les zones discrètes sont des zones gaufrées avec des enfoncements sur les deux côtés, et **en ce que**, dans les zones gaufrées, aussi bien les fibres de cellulose de la couche de base que les fibres du non-tissé sont comprimées à chaque fois les unes avec les autres.

4. Bande de matière fibreuse selon l'une des revendications 1 à 3, **caractérisée en ce que** le non-tissé contient des fibres à base de polymérisât pouvant être filé à chaud.

5. Bande de matière fibreuse selon la revendication 4, **caractérisée en ce que** le polymérisât pouvant être filé à chaud est du polymérisât à base de polyuréthane, le polypropylène, le polyéthylène, de polytétrafluoroéthylène ou de polymères de silicone.

6. Bande de matière fibreuse selon l'une des revendications 1 à 8, **caractérisée en ce que** la couche extérieure présente un supplément de matières auxiliaires et de matières de charge telles que du dioxyde de titane, de la craie, du kaolin, des polymères superabsorbants, des agents actifs inhibant les odeurs, de préférence à base de cyclodextrine.

7. Bande de matière fibreuse selon l'une des revendications 1 à 9, **caractérisée en ce qu'**à chaque fois une couche de non-tissé à base de fibres est disposée sur chacun des deux côtés de la couche de base et est reliée par endroits à la couche de base.

8. Bande de matière fibreuse selon l'une des revendications précédentes, **caractérisée en ce que**, à chaque fois, une couche à base d'un film plastique imperméable à l'eau et/ou perméable à l'eau est disposée sur le côté supérieur de la couche de base et est reliée dans les zones discrètes à la couche de base.
